# EUROPÄISCHE PATENTANMELDUNG

(11) **EP 1 195 664 A1**
(43) Veröffentlichungstag der Anmeldung: **10.04.2002**
(21) Anmeldenummer: 00121005.3
(22) Anmeldetag: 27.09.2000
(51) Int. Cl.: G05B 19/05

(54) **Service-System mit Optimierung**

(71) Anmelder: ABB PATENT GmbH, 68526 Ladenburg (DE)
(72) Erfinder: Müller, Peter, Dipl.-Ing., 69221 Dossenheim (DE); Schneider, Jochen, Dipl.Ing., 68161 Mannheim (DE); Zehnpfund, Andreas, Dipl.-Ing., 69124 Heidelberg (DE)
(74) Vertreter: Miller, Toivo

(57) **Zusammenfassung**

Die Erfindung bezieht sich auf ein Service-System zur Fern-Überwachung, - Beeinflussung und -Optimierung wenigstens einer technischen Anlage (3) und/oder wenigstens eines damit durchgeführten technischen Prozesses (13.1 bis 13.n). Dabei ist jeweils ein Service Server (1) mit einem Automatisierungssystem (2) der jeweiligen technischen Anlage (3) verbunden. Es ist ein als mit Bedien- und Anzeigemitteln versehener Rechner ausgeführter Service Klient (4) vorhanden, der mittels einer Netzwerkverbindung (5) mit dem jeweiligen Service Server (1) oder mit einem Optimierungsserver (7) verbindbar ist, wobei der Optimierungsserver (7) mittels Netzwerkverbindungen (5) mit dem jeweiligen Service Server (1) mehrerer technischer Anlagen (3) verbunden ist. Jeder Service Server (1) ist mittels einer Datenschnittstelle (12), Basisdiensten (8), und Anwenderprogrammen (9, 10, 11) dafür eingerichtet, anlagenbezogene, leitsystembezogene oder prozessbezogene Daten aus dem zugehörigen Automatisierungssystem (2) abzurufen, zu speichern und zu verarbeiten.

## Beschreibung

Die Erfindung bezieht sich auf ein Service-System zur Fern-Überwachung, -Beeinflussung und -Optimierung wenigstens einer technischen Anlage und/oder wenigstens eines damit durchgeführten technischen Prozesses.

Eine gängige Methode, Service an einer Anlage durchzuführen, ist entweder Servicepersonal vor Ort an der Anlage stationiert zu haben oder Servicepersonal bei Bedarf zu einer Anlage zu entsenden.

Bekannt ist auch das Betrachten von Prozeßwerten einer entfernten Anlage über eine Netzwerkverbindung, wie beispielsweise in Itschner, R.; Pommerell, C.; Rutishauser, M: Remote Monitoring of Embedded Systems in Power Engineering. In IEEE Internet Computing, Vol. 2, No. 3, May/June 1998 beschrieben ist. Ebenfalls werden bereits Anlagen von entfernt stationiertem Betriebspersonal bedient. Dies ist z.B. beschrieben in Bernhard Stang: Integrierte Fernwartungssysteme, in Brennstoff, Wärme, Kraft (BWK), Bd. 19 (1997), Nr. 9/10, pp. 49ff. Eine automatisierte Analyse und Optimierung des Anlagen- oder Prozeßzustandes am Ort einer Fabrikanlage ist damit aber nicht möglich.

Das derzeitig angewandte Service-Konzept mit Vorortservice hat den Nachteil, daß das Servicepersonal an der Anlage sein muß, um dort Arbeiten durchzuführen. Insbesondere bei Prozeßoptimierungen und komplizierten Analysen wird dabei qualifiziertes Personal gebunden und es entstehen hohe Kosten für Reisen und unproduktive Ausfallzeiten. Außerdem ist es dann nicht immer möglich, den geeigneten Experten für eine Problemlösung auf die Anlage zu schicken, da dies aufgrund der unangemessen hohen Nebenkosten nicht wirtschaftlich ist, oder weil die Fehlerursache zunächst nicht bekannt ist.

Zudem entstehen den Betreibern der Anlagen hohe Kosten dadurch, daß in Fällen, bei denen kein Service-Experte vor Ort ist, wertvolle Produktionszeit ungenutzt verstreicht bis zu dem Zeitpunkt, an dem ein Experte vor Ort eintrifft und mit der Problemlösung beginnen kann.

Der Erfindung liegt daher die Aufgabe zugrunde, ein Service-System anzugeben, das es ermöglicht, die Zeit zur Behebung von Störungen - wenigstens teilweise - durch automatisierte Analysen wesentlich zu reduzieren und somit Servicekosten zu sparen. Außerdem soll ermöglicht sein, Prozeßoptimierungen schnell und unter Einsatz eines Service-Hilfsmittels auf mehreren, auch unterschiedlichen Anlagen durchzuführen.

Diese Aufgabe wird durch ein Service-System gelöst, das die im Anspruch 1 angegebenen Merkmale aufweist. Vorteilhafte Ausgestaltungen sind in weiteren Ansprüchen angegeben.

Mit der Erfindung wird demnach vorgeschlagen, einen Service Server vorzusehen, der mit dem zur Anlage gehörigen Automatisierungssystem verbunden ist, und der dafür eingerichtet ist, selbsttätig Analysen durchzuführen. Eine als Service Klient bezeichnete Anzeige- und Bedienstation ist über ein Netzwerk mit dem Service Server direkt oder über einen Optimierungsserver verbunden. Auch der Optimierungsserver ist dafür eingerichtet, Analysen zum Anlagen- oder Prozeßzustand durchzuführen.

Eine weitere Beschreibung der Erfindung und deren Vorteile erfolgt nachstehend anhand eines in Zeichnungsfiguren dargestellten Ausführungsbeispiels.

Es zeigt:
- Fig. 1: die Struktur des Service Systems für den Fall einer einzelnen Fabrikanlage,
- Fig. 2: eine mögliche Systemarchitektur im Fall mehrerer Fabrikanlagen,
- Fig. 3: Komponenten eines Service Servers, und
- Fig. 4: beispielhafte Darstellung der Arbeitsweise des Service Systems.

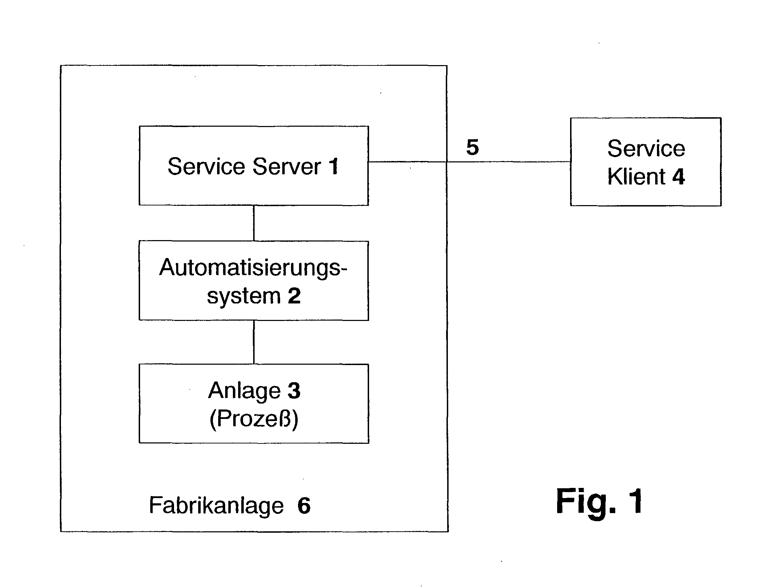

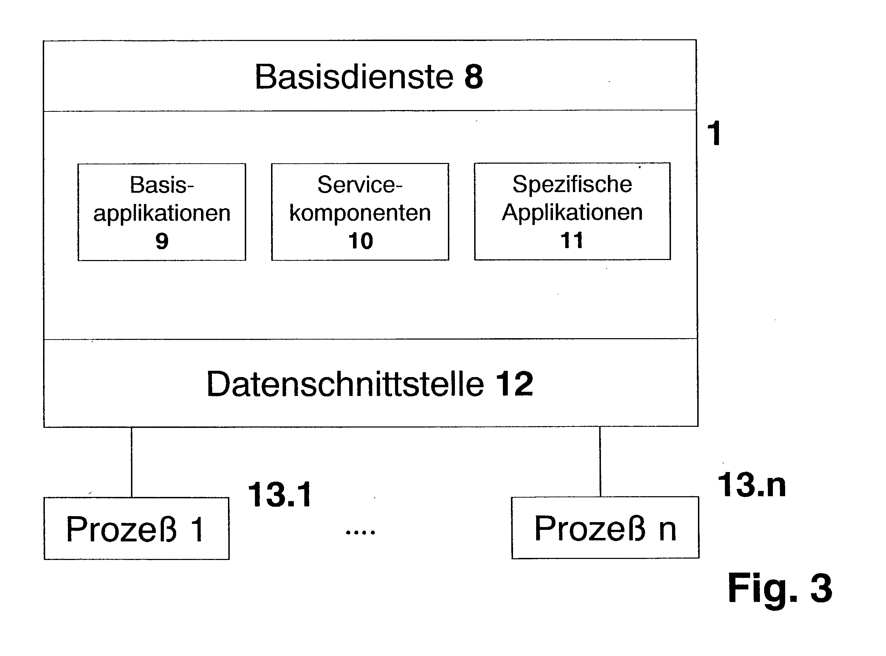

In Fig. 1 ist eine Systemstruktur für eine einzelne Fabrikanlage 6, z.B. eine Papierfabrik oder ein Kraftwerk, dargestellt. Innerhalb einer solchen Fabrikanlage befindet sich eine Anlage oder Maschine 3, mit der ein oder mehrere technische Prozesse 13.1 bis 13.n (vergl. Fig. 3) durchgeführt werden. Die technische Anlage 3 ist in üblicher Weise mit einem Automatisierungssystem 2 verbunden, mit dessen Hilfe die Anlage 3 gesteuert und geregelt wird, und mit dem Anlagen- oder Prozeß-bezogene Daten erfaßt werden. Insoweit also eine typische Anordnung, die so in fast allen Produktionsbetrieben vorzufinden ist.

In einem solchen System können grundsätzlich zwei Arten von Service unterschieden werden:
a) Service zu Instandhaltung der Prozeßanlage und des Automatisierungssystems, d.h. Tätigkeiten, die zum Ziel haben, den anfänglichen Betriebszustand der Anlage zu gewährleisten und zu sichern.
b) Service zur Optimierung der Anlage (Process and Application Consulting), d.h. Tätigkeiten, die zum Ziel haben, den Betrieb der Anlage zu optimieren, um z.B. mehr, kostengünstiger und/oder mit besserer Qualität zu produzieren.

Für beide Arten des Services ist es nach dem Stand der Technik nötig, daß ein Experte oder Service-Techniker einen großen Teil seiner Zeit direkt vor Ort auf der Fabrikanlage verbringt, um dort sämtliche Tätigkeiten durchzuführen, die es ermöglichen, oben genannte Ziele zu erreichen. Als Arbeitsmittel steht dem Service-Techniker üblicherweise ein Service-Gerät zur Verfügung, d.h. ein Rechner, auf dem die von ihm benutzte Software installiert ist. Dieser Rechner wird direkt mit dem Automatisierungssystem verbunden, um Daten auszutauschen, oder um Daten auf Datenträgern des Automatisierungssystems zum Service Klient zu übertragen.

Bei der in Fig. 1 dargestellten erfindungsgemäßen Systemstruktur ist das Automatisierungssystem 2 mit einem Service Server 1 verbunden. An den Service Server 1 ist ein Service Klient 4 angeschlossen oder anschließbar. Der Service Server 1 ist ein Rechner, der eine Reihe von Eigenschaften hat, die es ermöglichen, einen Remote Service von Automatisierungssystemen und eine Remote Prozeßoptimierung durchzuführen.

Zu diesen Eigenschaften des Service Servers gehören:
- Die Fähigkeit, Prozeßdaten anzuzeigen, zu speichern, zu analysieren und zur Verfügung zu stellen.
- Das selbständige Ausführen von Aktionen, z.B. das Starten von Applikationen, das Versenden einer Mail/SMS, das Anzeigen einer Meldung
   1. nach Plan, z.B. entsprechend eines vorkonfigurierten Zeitplans; und/oder
   2. aufgrund von Ereignissen, z.B. aufgrund eines Alarms, eines Fehlerzustands, einer Abweichung von Vorgaben oder aufgrund von Ergebnissen einer Analyse.
- Das Vorhandensein eines modularen Baukastensystems, um spezifische Serviceapplikationen zur Laufzeit aus bestehenden Komponenten zusammenzustellen.
- Die Bereitstellung von vorkonfigurierten Basisapplikationen, die es dem Benutzer erlauben, einen Überblick über den Zustand des Automatisierungssystems und des Prozesses zu bekommen.
- Eine Leitsystem-unabhängige Prozeßanbindung.
- Die Fähigkeit, den Service Server remote zu bedienen und zu konfigurieren.
- Die Bereitstellung von Basisdiensten, wie z.B.:
   ■ Benutzerauthentifizierung, Zuweisung von Benutzerrollen, sichere Übertragung von Daten zu einem entfernten Klienten;
   ■ die automatische Erzeugung einer Menüstruktur (z.B. mit Haupt- und Untermenüs und Übersichten in Form einer Web-Seite, personalisierte Darstellung entsprechend der Benutzerrolle);
   ■ Benachrichtigungsdienste wie z.B. E-Mail, SMS.

Der Aufbau des Service Servers ist in Fig. 3 dargestellt:
- Über eine Datenschnittstelle 12 ist der Service Server 1 mit dem Leit- oder Automatisierungssystem 2 verbunden. Dabei unterteilt sich die Datenschnittstelle in ein leitsystem-unabhängiges Interface und eine leitsystem-spezifische Implementierung (in der Zeichnung nicht dargestellt). Alle Applikationen greifen über das leitsystem-unabhängige Interface auf die Prozeßdaten zu. Dadurch können Applikationen, die im Service Server 1 laufen, ohne Anpassung für verschiedene Leitsysteme 2 eingesetzt werden.
- Basisdienste 8 bieten allgemeine Funktionen wie Login, Mail Support, Security, Personalisierung und Funktionen zur automatischen Erzeugung einer Menüstruktur der auf dem Service Server laufenden Applikationen.
- Basisapplikationen 9 bieten Funktionen, die einen Überblick über den Zustand des Automatisierungssystems und des Prozesses ermöglichen. Diese Basisapplikationen 9 können z.B. Prozeßwerte numerisch und grafisch darstellen.
   Dabei können die Daten des unterlagerten Prozeßleitsystems 2 automatisch und ohne Vorkonfiguration dargestellt werden.
- Spezifische Applikationen 11 können aus einzelnen Servicekomponenten 10 erstellt werden, die als modulares Baukastensystem vom Service Server bereitgestellt werden. Diese Applikationen können auch unter Verwendung der bereitgestellten Interfaces, also Basisdienste 8 und Datenschnittstelle 12, neu erstellt werden.

In der vorgeschlagenen Struktur befinden sich die Anlage 3, das Automatisierungssystem 2 und der Service Server 1 alle innerhalb einer Fabrikanlage 6. Sie sind wie oben beschrieben miteinander verbunden. Ein von einem Service-Techniker benutzter Service Klient 4 kann mit Hilfe einer Netzwerkverbindung 5 mit dem Service Server 1 verbunden werden, um Daten vom Server 1 zum Klient 4 zu übertragen und um den Service Server 1 zu benutzen. Techniker und Klient 4 können sich innerhalb der Fabrikanlage, aber vor allem auch beliebig weit von der Fabrik entfernt befinden. Die Verbindung 5 zwischen dem Service Server 1 und dem Service Klient 4 ist standardisiert und basiert z.B. auf dem HTTP-Protokoll, so daß sie über eine Vielzahl von Medien hergestellt werden kann, wie z.B. Lokales Netzwerk, ISDN, Modem, GSM sowohl im Intranet der Fabrik als auch im Internet.

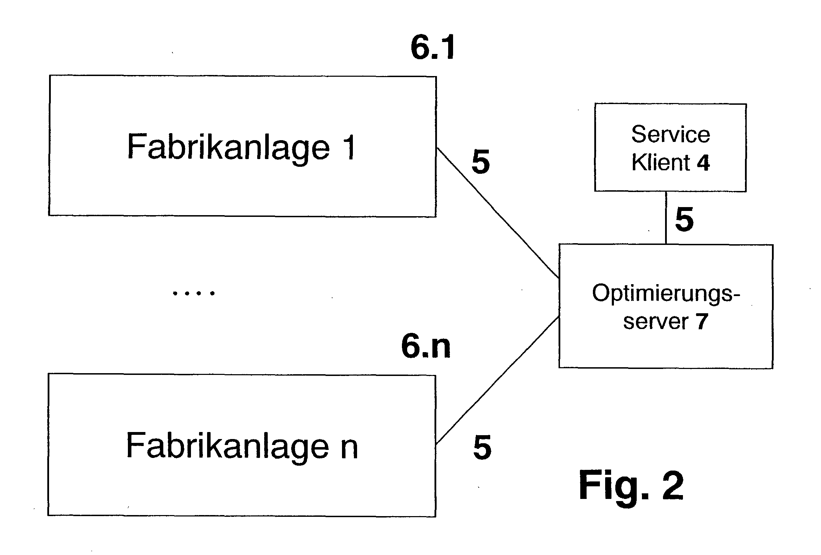

Fig. 2 zeigt, daß in Erweiterung der anhand der Fig. 1 und Fig.2 beschriebenen Struktur es möglich ist, daß mehrere Fabrikanlagen 6.1 bis 6.n mit einem zentralen Optimierungsserver 7 verbunden sind, der sich außerhalb der Fabriken befindet. Hierbei sind jeweils die einzelnen Service Server 1 der Fabriken 6.1 bis 6.n mit dem Optimierungsserver 7 über Netzwerke 5 verbunden.

Der Optimierungsserver hat die folgenden Eigenschaften:
- Die Fähigkeit, Prozeßdaten von den einzelnen Anlagen 3 anzuzeigen, zu speichern, zu analysieren und zur Verfügung zu stellen.
- Die Ausführung dieser Tätigkeiten kann sowohl einzeln für jede Anlage 3, als auch gesammelt über alle Anlagen 3 geschehen.

Ein Service-Experte kann sich in dieser Struktur mit seinem Service Klient 4 direkt mit dem Optimierungsserver 7 verbinden und so auf die Daten von mehreren Service Servern 1 zugreifen und den Optimierungsserver benutzen.

Das dargestellte Service-System ermöglicht nachstehend angegebene Arbeitsweise zur Durchführung von Remote Service in Automatisierungsanlagen und zur Remote Prozeßoptimierung.
a) Ausgewählte Daten werden von den Service Servern aufgezeichnet, entweder automatisch oder auf Anforderung.
b) Die Daten werden dann:
   - entweder nur gesammelt und gespeichert, oder
   - zusätzlich vom Service Server analysiert und die Ergebnisse der Analyse werden gespeichert, oder
   - die Daten werden an den zentralen Optimierungsrechner geschickt und dort analysiert.
c) Die Daten und/oder das Analyseergebnis werden von den Service Servern und/oder dem Optimierungsrechner für den Zugriff des Service Experten aufbereitet und zur Verfügung gestellt.
d) Die Daten und/oder das Analyseergebnis werden automatisch an einen Service Klienten geschickt, so daß der Service-Experte informiert wird, z.B. per E-Mail oder SMS.
e) Basierend auf den Analyseergebnissen wird automatisch oder durch den benachrichtigten Service-Experten in das Automatisierungssystem Eingriff genommen, um
   - den Prozeß zu verbessern, und/oder
   - einen Fehler soweit wie möglich zu beheben oder präventiv zu vermeiden.

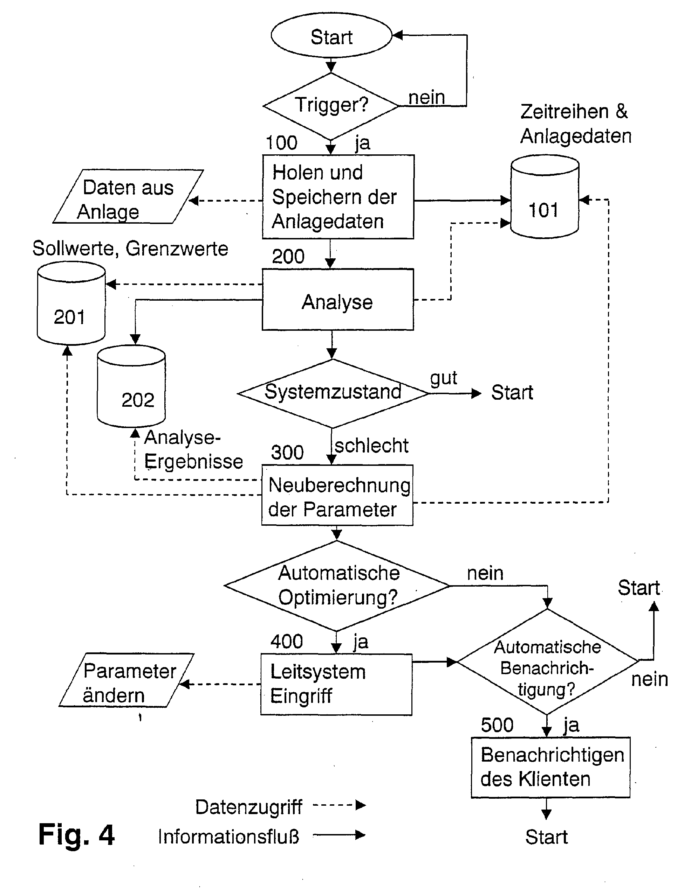

Fig. 4 zeigt beispielhaft die Arbeitsweise des in Fig. 1 dargestellten Service Systems zur Durchführung von Remote Service in Automatisierungsanlagen und zur Remote Prozeßoptimierung. Im Ausgangszustand wartet der Service Server 1 auf einen Trigger zur Datenaufzeichnung. Falls die Voraussetzung für eine Datenaufzeichnung erfüllt ist, werden in Schritt 100 Daten aus dem Automatisierungssystem 2 geholt und einer Datenbank 101 des Service Servers 1 als Zeitreihen zur späteren Analyse abgespeichert. Voraussetzungen für die Datenaufzeichnung sind z.B.:
- der Ablauf eines bestimmten Zeitintervalls,
- eine Eingabeaufforderung von einem Benutzer des Service Servers.

Danach erfolgt in Schritt 200 die Analyse der aufgezeichneten Daten. Dazu werden aus den in der Datenbank 101 abgelegten Zeitreihen mindestens ein oder mehrere Performance-Kennziffern berechnet und mit den Sollwerten für diese Kennziffern 201 verglichen. Solche Kennziffern sind z.B. die Varianz einer Prozeßgröße oder die maximale Regelabweichung eines Regelkreises. Das Analyseergebnis wird in einer Datenbank 202 abgespeichert.

Wenn das Ergebnis des Vergleichs außerhalb der zulässigen Grenzen liegt, d.h. der Systemzustand schlecht ist, dann werden im Schritt 300 automatisch neue, optimierte Parameter für das Automatisierungssystem 2 berechnet. Andernfalls wird in den Ausgangszustand zurückgekehrt. Grundlage dieser Berechnung sind die Daten in den Datenbanken 101, 201 und 202 des Service Servers. Diese zu optimierenden Parameter sind z.B. der Sollwert für einen Regelkreis oder die Parameter eines Reglers. Für die Berechnung der Parameter wird aus den aufgenommenen Zeitreihen ein Modell der Regelstrecke bestimmt, welches dann genutzt wird, um mit bekannten Verfahren zur Reglerauslegung neue, optimierte Parameter zu bestimmen.

Ist die automatische Optimierung aktiviert, werden die in Schritt 300 berechneten Parameterwerte in das Automatisierungssystem 2 geschrieben, so daß die Anlage 3 bzw. der von ihr geregelte Prozeß optimal betrieben wird.

In jedem Fall wird dann geprüft, ob die automatische Benachrichtigung aktiviert ist. Wenn dies der Fall ist, wird der Service Klient 4 über die berechneten Parameter und die eventuell in der Automatisierungsanlage 2 vorgenommenen Änderungen z.B. per E-Mail oder SMS informiert. Andernfalls wird, ebenso wie nach erfolgter Benachrichtigung, in den Ausgangszustand zurückgekehrt.

In einem weiteren Beispiel laufen die Schritte 200 und 300 auf dem zentralen Optimierungsserver 7 (vergl. Fig. 2) mit dem Ziel einer Analyse und Optimierung über mehrere Anlagen. In diesem Fall befinden sich die Datenbanken 201 und 202 auf dem Optimierungsserver. Nach erfolgter Analyse und Parameterberechnung wird der Schritt 400 durch die Service Server in den einzelnen Anlagen ausgeführt.

## Patentansprüche

1. Service-System zur Fern-Überwachung, -Beeinflussung und -Optimierung wenigstens einer technischen Anlage (3) und/oder wenigstens eines damit durchgeführten technischen Prozesses (13.1 bis 13.n), wobei
a) jeweils ein Service Server (1) mit einem Automatisierungssystem (2) der jeweiligen technischen Anlage (3) verbunden ist,
b) ein als mit Bedien- und Anzeigemitteln versehener Rechner ausgeführter Service Klient (4) vorhanden ist, der
- gemäß einer ersten Variante mittels einer Netzwerkverbindung (5) mit dem jeweiligen Service Server (1) verbindbar ist oder fest verbunden ist,
- oder gemäß einer zweiten Variante mit einem Optimierungsserver (7) verbindbar ist oder fest verbunden ist, wobei der Optimierungsserver (7) mittels Netzwerkverbindungen (5) mit dem jeweiligen Service Server (1) mehrerer technischer Anlagen (3) verbunden ist, und
c) jeder Service Server (1) mittels einer Datenschnittstelle (12), Basisdiensten (8), und Anwenderprogrammen (9, 10, 11) dafür eingerichtet ist,
- den Anwenderprogrammen (9, 10, 11) zu ermöglichen, anlagenbezogene, leitsystembezogene oder prozessbezogene Daten aus dem zugehörigen Automatisierungssystem (2) über die Datenschnittstelle (12) und gegebenenfalls über den Optimierungsserver (7) abzurufen, zu speichern und zu verarbeiten, und zumindest im Fall der ersten Variante zu analysieren,
- durch diese Datenerfassung und -Verarbeitung und gegebenenfalls Analysen ermittelte Informationen bezüglich des Zustands der technischen Anlage (3), des Automatisierungssystems (2) oder des Prozesses (13.1 bis 13.n) zum Optimierungsserver (7) oder zum Service Klient (4) zu übertragen und anzuzeigen.

2. Service System nach Anspruch 1, **dadurch gekennzeichnet, daß** die Datenschnittstelle (12) des Service Servers (1) in ein leitsystem-unabhängiges Interface und eine leitsystem-spezifische Implementierung unterteilt ist.

3. Service System nach Anspruch 1 oder 2, **dadurch gekennzeichnet, daß** Service Server (1) mehrerer Fabrikanlagen (6.1 bis 6.n) jeweils über eine Netzwerkverbindung (5) mit einem Optimierungsserver (7) verbunden sind, der dafür eingerichtet ist, Analysen zum Anlagen- oder Prozeß-Zustand durchzuführen, und mit dem der Service Klient (4) verbindbar ist.

4. Service System nach einem der vorstehenden Ansprüche, **dadurch gekennzeichnet, daß** der Service Server (1) mittels seiner Anwenderprogramme (9, 10, 11) dafür eingerichtet ist, die Übertragung von Analyseergebnissen zum Optimierungsserver (7) oder zum Service Klient (4) automatisch zu veranlassen.

5. Service System nach einem der vorstehenden Ansprüche, **dadurch gekennzeichnet, daß** der Optimierungsserver (7) außerdem dafür eingerichtet ist, vergleichende und/oder zusammenfassende Analysen über mehrere Fabrikanlagen (6.1 bis 6.n) durchzuführen.

6. Service System nach einem der vorstehenden Ansprüche, **dadurch gekennzeichnet, daß** der Optimierungsserver (7) außerdem dafür eingerichtet ist, die Übertragung von Analyseergebnissen zum Service Klient (4) automatisch zu veranlassen.

7. Service System nach einem der vorstehenden Ansprüche, **dadurch gekennzeichnet, daß** der Service Server (1) mittels seiner Anwenderprogramme (9, 10, 11) dafür eingerichtet ist, basierend auf den Analyseergebnissen auf das Automatisierungssystem (2) Einfluß zu nehmen, um die Anlage (3) oder wenigstens einen der damit automatisierten Prozesse (13.1 bis 13.n) zu optimieren.

8. Service System nach einem der vorstehenden Ansprüche, **dadurch gekennzeichnet, daß** der Optimierungsserver (7) dafür eingerichtet ist, basierend auf den Analyseergebnissen auf wenigstens eines der Automatisierungssysteme (2) Einfluß zu nehmen, um eine der Anlagen (3) oder wenigstens einen der damit automatisierten Prozesse (13.1 bis 13.n) zu optimieren.

9. Service System nach einem der vorstehenden Ansprüche, **dadurch gekennzeichnet, daß** die Netzwerkverbindung (5) eine standardisierte, auf dem HTTP-Protokoll beruhende Internetverbindung ist.

10. Service System nach einem der vorstehenden Ansprüche, **dadurch gekennzeichnet, daß** im Rahmen der automatischen Analyse auf dem Service Server (1) oder dem Optimierungsserver (7) einer oder mehrere Performance-Kennziffern berechnet werden, die Qualitätsmerkmale des Automatisierungssystems (2) und/oder des damit automatisierten Prozesses darstellen
